# EUROPÄISCHE PATENTSCHRIFT

(11) **EP 2 836 687 B1**
(45) Veröffentlichungstag und Bekanntmachung des Hinweises auf die Patenterteilung: **24.08.2016**
(21) Anmeldenummer: 13714902.7
(22) Anmeldetag: 03.04.2013
(51) Int. Cl.: B01D 53/86, F01N 3/20, F01N 3/28

(54) **ELEKTRISCHER ANSCHLUSS VON MEHREREN BLECHLAGEN EINES ELEKTRISCH BEHEIZBAREN WABENKÖRPERS UND ZUGEHÖRIGER WABENKÖRPER**
ELECTRICAL CONNECTION OF SEVERAL SHEET METAL LAYERS OF AN ELECTRICALLY HEATABLE HONEYCOMB STRUCTURE AND CORRESPONDING HONEYCOMB STRUCTURE
CONNECTION ÉLECTRIQUE DE PLUSIEURS COUCHES EN TÔLE D'UN CORPS EN NID D'ABEILLE ET CORPS EN NID D'ABEILLE CORRESPONDANT

(30) Priorität: 05.04.2012 DE 102012007020
(43) Veröffentlichungstag der Anmeldung: 18.02.2015
(73) Patentinhaber: Continental Automotive GmbH, 30165 Hannover (DE)
(72) Erfinder: BRÜCK, Rolf, 51429 Bergisch Gladbach (DE); KURTH, Ferdi, 53894 Mechernich (DE); HIRTH, Peter, 51503 Rösrath (DE); HÄRIG, Thomas, 53819 Neunkirchen-Seelscheid (DE)
(86) Internationale Anmeldenummer: PCT/EP2013/057009
(87) Internationale Veröffentlichungsnummer: WO 2013/150066

(56) Entgegenhaltungen:
- EP-B1- 1 967 712
- WO-A1-92/02714
- GB-A- 2 313 559

## Beschreibung

Die vorliegende Erfindung liegt auf dem Gebiet der elektrisch beheizbaren Wabenkörper, insbesondere für Abgasbehandlungssysteme von Verbrennungsmotoren, vorzugsweise in Kraftfahrzeugen. Elektrisch beheizbare Wabenkörper werden beispielsweise benötigt, um Komponenten in einem Abgasreinigungssystem zu heizen, um dadurch eine bestimmte Mindesttemperatur für bestimmte chemische Reaktionen, insbesondere auch für katalytisch aktivierte Reaktionen, zu erreichen oder aufrechtzuerhalten. Dies findet beispielsweise bei Abgaskatalysatoren, Partikelfiltern und/oder Anlagen zu Reduzierung von Stickoxiden Anwendung.

Eine typische Bauform eines solchen elektrisch beheizbaren Wabenkörpers ist z. B. in der WO 96/10127 beschrieben. Auch die EP 1 967 712 zeigt den Aufbau eines elektrisch beheizbaren Wabenkörpers. In beiden Schriften ist die Möglichkeit dargestellt, einen solchen elektrisch beheizbaren Wabenkörper an einem benachbart angeordneten Wabenkörper (elektrisch isoliert) abzustützen.

Um einen für eine elektrische Beheizung genügend hohen Ohmschen Widerstand bereitstellen zu können, umfassen solche elektrisch beheizbare Wabenkörper mindestens einen Stapel von mehreren Blechlagen, die so strukturiert sind, dass sie für ein Gas in einer axialen Richtung durchströmbare Kanäle bilden. Typischerweise werden dafür grob strukturierte Bleche sowie fein strukturierte und/oder glatte Bleche abwechselnd aufeinander geschichtet. Durch gegensinniges Verschlingen des Stapels nach Art einer S-Form, einer U-Form oder dergleichen wird dieser Stapel so geformt, dass er einen runden oder ovalen Querschnitt ausfüllt, wobei benachbarte Windungen des Stapels elektrisch voneinander isoliert sein müssen. Dies kann durch Isolierschichten und/oder durch elektrisch isolierende Luftspalte erreicht werden, wobei Luftspalte bei starken thermischen Dehnungen der Bleche/Stapel im Betrieb dadurch stabilisiert werden können, dass die Windungen des Stapels mittels Stützstiften an einem benachbarten Wabenkörper befestigt und dadurch in ihrer Position gesichert sind. Auf diese Weise können auch in axialer Richtung relativ kurze elektrisch beheizbare Wabenkörper stabilisiert werden, beispielsweise Wabenkörper mit einer axialen Ausdehnung von nur 1 bis 5 cm.

Es hat sich gezeigt, dass für die Stabilität und/oder die elektrischen Eigenschaften eines elektrisch beheizbaren Wabenkörpers vorteilhaft ist, diesen aus abwechselnden grob strukturierten Blechlagen und fein strukturierten Blechlagen aufzubauen, insbesondere aus Blechlagen mit einer feinen ersten Wellung (mit einer kleinen ersten Wellhöhe und einer kleinen ersten Wellenlänge) und aus Blechlagen mit einer zweiten groben Struktur (mit einer zweiten Wellung mit großer zweiter Wellhöhe und/oder großer zweiter Wellenlänge). Bevorzugt werden die Blechlagen innerhalb eines Stapels an einigen (ausgewählten) oder allen Berührungspunkten miteinander verlötet bzw. durch Diffusionsanbindungen aneinander befestigt.

Ein technisches Problem stellt allerdings die elektrische Verbindung des Stapels mit einer externen Stromquelle dar. Da der verschlungene elektrisch leitfähige Stapel im Inneren eines metallischen Mantelrohrs angeordnet werden muss, ist zumindest eine elektrisch vom Mantelrohr isolierte Zuführung zu dem Stapel erforderlich, wobei typischerweise so hohe Stromstärken durch den Stapel geleitet werden sollen, dass eine möglichst gleichmäßige Verteilung des Stroms auf die einzelnen Blechlagen des Stapels auch im Bereich der Kontaktierung wünschenswert oder zur Vermeidung von Schäden sogar erforderlich ist.

Bei den im Stand der Technik bekannten Ausführungsformen sind daher typischerweise Stromverteilungsstrukturen vorhanden, an denen die einzelnen Blechlagen des Stapels enden, wobei die Stromverteilungsstruktur wiederum über einen durch den Metallmantel des Wabenkörpers elektrisch isoliert hindurch geführten Anschlussstift kontaktiert ist. Die bei der beschriebenen Bauform typische Stromverteilungsstruktur ist eine Art Halbschale, die parallel zu dem Metallmantel verläuft und an der einzelne Blechlagen enden und metallisch verbunden, insbesondere angelötet, sind. Diese Stromverteilungsstruktur muss wiederum durch eine Isolierschicht von dem Metallmantel des Wabenkörpers elektrisch isoliert sein. Dies kann durch einen Luftspalt erreicht werden, jedoch ist es dazu erforderlich, dass die Stromverteilungsstruktur ebenfalls in ihrer Lage stabilisiert wird, was vorzugsweise durch zusätzliche Stützstifte erfolgt, wobei auch hier immer auf die elektrische Isolierung von den Strukturen, an denen die Abstützung erfolgt, geachtet werden muss.

Das Problem der elektrischen Kontaktierung stellt sich bei einem elektrisch beheizbaren Wabenkörper mindestens an einer Seite des Stapels, nämlich dann, wenn die andere Seite des Stapels direkt an dem Metallmantel angebunden werden kann/soll. Falls beide Enden des Stapels nicht mit (elektrischer) Masse verbunden werden sollen, müssen auch beide Enden des Stapels entsprechend kontaktiert werden.

Aufgabe der vorliegenden Erfindung ist es, die mit Bezug auf den Stand der Technik geschilderten Probleme wenigstens teilweise zu lösen. Insbesondere soll ein elektrischer Anschluss von mehreren Blechlagen eines Wabenkörpers an einen Anschlussstift geschaffen werden, der einfach und preisgünstig herzustellen ist, eine Stromverteilungsstruktur parallel zum Metallmantel weitgehend vermeidet und trotzdem eine gleichmäßige Verteilung des Stromes und einen stabilen Aufbau eines elektrisch beheizbaren Wabenkörpers ermöglicht.

Zur Lösung dieser Aufgaben dient ein elektrischer Anschluss gemäß den Merkmalen des Anspruchs 1. Vorteilhafte Ausgestaltungen sind in den abhängigen Ansprüchen beschrieben, wobei diese in technisch sinnvoller Weise untereinander kombiniert werden können. Die Beschreibung, insbesondere im Zusammenhang mit den Figuren, erläutert bzw. präzisiert die in den Ansprüchen aufgeführten Merkmale und gibt weitere vorteilhafte Ausführungsvarianten an. Außerdem wird ein Wabenkörper mit einem erfindungsgemäßen elektrischen Anschluss geschaffen.

Demnach wird ein elektrischer Anschluss von mehreren Blechlagen eines Wabenkörpers an einem Anschlussstift vorgeschlagen, wobei der Wabenkörper einen Metallmantel mit einem Innenumfang aufweist, durch den der Anschlussstift in einer Durchführung elektrisch isolierend hindurchgeführt ist. Weiter ist vorgesehen, dass die Blechlagen abwechselnd angeordnete grob strukturierte Blechlagen sowie fein strukturierte oder glatte Blechlagen sind, die gemeinsam einen Stapel mit einer obersten Blechlagen und einer untersten Blechlage bilden, der für ein Gas von einer Eintrittsseite zu einer Austrittsseite in einer axialen Richtung durchströmbare Kanäle zwischen den Blechlagen aufweist. Zudem verläuft der Anschlussstift (etwa) senkrecht zu den Blechlagen und damit in einer radialen Richtung und mit mindestens zwei der Blechlagen, vorzugsweise mindestens der Hälfte der Blechlagen, insbesondere allen Blechlagen, über mindestens ein elektrisch leitfähiges Zwischenstück, welches mehrere Blechlagen des Stapels umgreift, metallisch verbunden ist.

Obwohl es schwierig erscheint, einen relativ dicken Anschlussstift mit mehreren relativ dünnen Blechlagen, die zudem auch noch strukturiert sein können, zu verbinden, hat sich herausgestellt, dass eine Verbindung von zwei oder mehr aufeinander liegenden und/oder zusammengequetschten Blechlagen über ein Zwischenstück, welches diese Blechlagen (wenigstens teilweise) umgreift, nicht nur möglich ist, sondern sogar zu einer sehr stabilen Halterung des Stapels führt. Dies wiederum erlaubt auch eine stabile Bildung eines Luftspalts zwischen dem Stapel und dem Metallmantel, ohne dass zusätzliche stabilisierende Strukturen wie Halbschalen oder Stromverteilungsstrukturen erforderlich sind.

Das Zwischenstück ist sowohl mit dem Anschlussstift als auch mit den kontaktierten Blechlagen in (direktem) elektrischen Kontakt. Insbesondere ist das Zwischenstück ein einstückiges Blech. Weiter ist bevorzugt, dass das Zwischenstück nach Art einer Klammer ausgeführt ist, die auf einer Außenseite mit dem Anschlussstift und auf einer Innenseite mit den Blechlagen in elektrischem Kontakt ist. Ein "Umgriff" ist insbesondere dann gegeben, wenn das Zwischenstück an den Stapel an zwei Seiten anliegt, bevorzugt an drei Seiten (Außenseite, Innenseite, vordere Stirnseite, hintere Stirnseite, Umfangsabschlussseite des Stapels).

In bevorzugten Ausführungsformen verläuft die oberste Blechlage in dem Stapel sogar über mindestens 35 %, vorzugsweise über mindestens 40 %, der Länge des Innenumfangs (etwa) parallel zu dem Metallmantel und ist von diesem nur durch einen Luftspalt getrennt. Betrachtet man den Wabenkörper von seiner Stirnseite in axialer Richtung und teilt ihn in Umfangsrichtung in 360° [Winkelgrad] ein, so verläuft die oberste (am weitesten radial außen liegende) Blechlage also bevorzugt über einen Winkelbereich von maximal 180° parallel zum Metallmantel, mindestens jedoch mindestens (etwa) 144°, je nach der genauen Formgebung des Anschlussbereiches und dem Verlauf des Stapels in das Innere des Wabenkörpers.

In einer weiteren bevorzugten Ausführungsform ist die oberste Blechlage, vorzugsweise auch die unterste Blechlage, des Stapels eine fein strukturierte Blechlage oder eine glatte Blechlage. Dies ist besonders vorteilhaft, weil bevorzugt die oberste Blechlage und auch die unterste Blechlage des Stapels mit dem Zwischenstück metallisch verbunden sind, wodurch die übrigen Blechlagen quasi eingeschlossen werden und ihre Enden, selbst wenn diese selbst nicht mit dem Zwischenstück verbunden werden können, keine Bewegungsfreiheit haben und daher keine elektrischen Kurzschlüsse verursachen können.

Unterstützt werden kann die Funktion der obersten und/oder der untersten Blechlage dadurch, dass eine oder beide zumindest in Teilbereichen eine Dickenverstärkung aufweist und/oder dicker sind als weitere bzw. die übrigen Blechlagen des Stapels. Insbesondere können die dickeren Teilbereiche eine Blechdicke von 80 bis 200 µm [Mikrometer] aufweisen, besonders bevorzugt 110 bis 170 µm, während die weitere Blechlagen bzw. die übrigen Blechlagen beispielsweise eine Dicke von 20 bis 60 µm [Mikrometer] aufweisen. Eine größere Dicke kann entweder dadurch erreicht werden, dass in dem gewünschten Teilbereich dickere Bleche eingesetzt werden und/oder dadurch, dass die oberste bzw. die unterste Blechlage in dem betreffenden Teilbereich aus mehreren, beispielsweise zwei oder drei aneinander liegenden und ggf. gemeinsam strukturierten, Blechschichten bestehen.

Dabei kann die unterste Blechlage zumindest in einem Anschlussbereich und entlang eines Teils des Stapels eine Dickenverstärkung aufweisen und/oder dicker sein als die übrigen Blechlagen. Beide äußeren Blechlagen dicker zu machen, erleichtert die metallische Verbindung mit dem Zwischenstück, insbesondere wenn die Methoden des Widerstandsschweißens oder Lötens angewendet wird.

Bevorzugt besteht zumindest die oberste Blechlage aus einem Nickel, Chrom und Eisen enthaltenden Stahl, auch unter der Bezeichnung *NiCroFer* bekannt. Die mechanischen und elektrischen Eigenschaften, insbesondere die gute elektrische Leitfähigkeit und Hochtemperaturkorrosionsbeständigkeit dieses Werkstoffes, bewirken eine besondere Eignung für die Anforderungen an die oberste Blechlage.

Für eine gleichmäßige Stromverteilung in dem Stapel ist besonders bevorzugt, alle Blechlagen mit dem Zwischenstück zu verbinden, wobei die Blechlagen dazu entweder zusammengepresst werden, um eine vorhandene Struktur zu glätten, und/oder in unveränderter Form von dem Zwischenstück umfasst werden.

Tatsächlich haben Versuche ergeben, dass besonders stabile Bauformen dann entstehen, wenn die grob strukturierten Blechlagen und fein strukturierten Blechlagen jeweils gewellt sind, wobei eine zweite Wellhöhe der grob strukturierten Bleche größer ist als eine erste Wellhöhe der fein strukturierten Bleche, und zwar um einen Faktor 3 bis 10, vorzugsweise 4 bis 6. Es hat sich gezeigt, dass unter verschiedenen Gesichtspunkten diese Art der Strukturierung vorteilhaft ist. Die Einbindung von Stützstiften wird durch eine gewisse Elastizität aller Blechlagen erleichtert, die elektrisch leitende Verbindung mit einem Zwischenstück kaum erschwert.

Bei Verwendung von gewellten/strukturierten Blechlagen für alle Blechlagen des Stapels ist es auch vorteilhaft, wenn die grob strukturierten Blechlagen eine zweite Wellenlänge aufweisen, die größer ist als eine erste Wellenlänge der fein strukturierten Blechlagen, und zwar beispielsweise mindestens um einen Faktor 1,5. Bei der Auswahl von Wellhöhen und Wellenlängen der grob strukturierten Blechlagen und fein strukturierten Blechlagen sind technisch vernünftige Grenzen einzuhalten. Insbesondere sind die Verhältnisse und Wellformen so gewählt, dass möglichst keine Kanäle mit sehr kleinem Querschnitt entstehen, die sich bei einer Beschichtung möglicherweise zusetzen können.

Bevorzugt ist das Zwischenstück auf einer Fläche von mindestens 10 mm² [Quadratmillimeter] mit beispielsweise 2 bis 5 Blechlagen des Stapels metallisch verbunden, wobei das Zwischenstück beispielsweise 3 bis 8 mm [Millimeter], vorzugsweise 4 bis 6 mm, vom Innenumfang des Metallmantels beabstandet ist. Auf diese Weise kann der elektrische Anschluss die erforderlichen elektrischen Ströme gleichmäßig in den Stapel einleiten und diesen gleichzeitig mit einem genügenden Abstand vom Metallmantel stabilisieren, so dass eine elektrische Isolierung zwischen Stapel und Metallmantel durch eine Luftspalt sichergestellt ist.

Auch für diese Wabenkörper ist eine bevorzugte Form eine gegensinnige Verschlingung des Stapels nach Art einer S-Form, wobei die Windungen des Stapels untereinander durch Luftspalte elektrisch isoliert sind. Diese Ausführungsform ist an sich bekannt, konnte jedoch wegen der bei starken Temperaturänderungen auftretenden mechanischen Bewegungen der Blechlagen bisher nicht ohne Stromverteilungsstrukturen nach Art von Halbschalen gebaut werden - dies wird erst mit dem hier vorgeschlagenen Zwischenstück ermöglicht.

Dabei hat gerade die oberste Blechlage des Stapels besondere Funktionen. Bei einer S-förmigen Bauform bildet diese oberste Blechlage über fast die Hälfte des Innenumfangs die Begrenzung zu dem isolierenden Luftspalt gegenüber dem Metallmantel, sie dient der elektrischen Verbindung mit dem Zwischenstück und begrenzt die inneren Blechlagen. Wenn die oberste Blechlage eine Dickenverstärkung aufweist bzw. dicker ist als die anderen Blechlagen, so hat es sich als vorteilhaft gezeigt, wenn dies nur über einen Teil der Länge des Stapels erfolgt, vorzugsweise bis etwa zur Mitte des Wabenkörpers. Es hat sich herausgestellt, dass in diesem Teilbereich des Stapels die oberste Blechlage gleichzeitig der Verteilung des elektrischen Stroms in dem Stapel dienen kann. Der Strom sucht sich immer den kürzesten Weg und den des geringsten Widerstands, weshalb er tendenziell zum inneren Bereich des Stapels fließt, was durch eine dickere oberste Blechlage kompensiert wird. Im Zentralbereich des Wabenkörpers wird jedoch durch das gegensinnige Verschlingen des Stapels die oberste Blechlage zur untersten Blechlage, weshalb es vorteilhaft ist, sie spätestens dort enden zu lassen bzw. ab dort eine dünnere Lage weiterzuführen. Dies kann beispielsweise an einem der Punkte erfolgen, an denen auch die Verschlingung ihre Richtung wechselt.

Für die Stabilisierung des Anschlussbereichs ist es besonders bevorzugt, den Stapel durch eine Vielzahl von Stützstiften in seiner Form zu stabilisieren, wobei mindestens ein Stützstift in einem Abstand von weniger als 10 cm [Zentimeter], vorzugsweise weniger als 5 cm, besonders bevorzugt weniger als 2 cm, entlang des Verlaufs des Stapels gemessen von dem Anschlussstift entfernt angeordnet ist. Dies dient insbesondere der Stabilisierung des Luftspalts gegenüber dem Metallmantel. Mindestens ein weiterer Anschlussstift mit einem ähnlichen Abstand kann vorgesehen werden, um ein aus dem Zwischenstück hervorstehendes Ende des Stapels zu stabil zu halten.

In einer ganz besonders bevorzugten Ausführungsform der Erfindung erstreckt sich das Zwischenstück zumindest bis zu der Eintrittsseite und/oder zu der Austrittsseite des Stapels und umgreift zumindest eine von diesen wenigstens teilweise. Zwar werden dadurch zumindest einige Kanäle versperrt bzw. abgedeckt, jedoch ist deren Anzahl im Hinblick auf die Gesamtanzahl von Kanälen des Wabenkörpers vernachlässigbar. Dafür wird aber die Kontaktierung der Blechlagen verbessert und es ist nicht unbedingt erforderlich, den Querschnitt des Stapels im Bereich des Zwischenstückes zu verformen. Das Zwischenstück bildet quasi eine Klammer um zumindest einen Teil des Stapels und verläuft dabei teilweise (parallel) vor der Eintrittsseite und/oder (parallel) hinter der Austrittsseite, wo genügend Platz zur Verfügung steht.

Alternativ oder zusätzlich kann das Zwischenstück den Stapel an einem Ende (Umfangsabschlussseite) umgreift. Bevorzugt ist das Zwischenstück in seiner Form an die Form der Querschnittsfläche und/oder die Form der Längsschnittsfläche des Endes des Stapels angepasst.

Dabei hat das Zwischenstück bevorzugt direkten Kontakt zu mehreren oder allen Blechlagen des Stapels hat, indem diese an der Eintrittsseite und/ oder der Austrittsseite auf Stoß an dem Zwischenstück anliegen, insbesondere an diesem angelötet sind.

In einer bevorzugten Ausführungsform hat die Querschnittsfläche des Stapels im Bereich des Zwischenstückes (im Wesentlichen) die gleiche Form und Größe wie im übrigen Verlauf des Stapels, insbesondere eine rechteckige Form.

Dabei kann das Ende des Stapels sich außerhalb des Zwischenstückes verjüngen und insbesondere in Form eines gekrümmten Keiles auslaufen, so dass sich eine gute Anpassung an die sonstige Form des Wabenkörpers ergibt. Ein über das Zwischenstück überstehendes Ende des Stapels führt im Betrieb zu einer zusätzlichen Kühlung des Anschlussbereiches.

Die Erfindung betrifft auch einen elektrisch beheizbaren Wabenkörper mit einem elektrischen Anschluss wie hier beschrieben ist. Die erfindungsgemäße Ausführung des elektrischen Anschlusses erlaubt eine vereinfachte Bauform und eine kostengünstige Herstellung, was insbesondere für eine Serienproduktion im Automobilbereich von Bedeutung ist.

Die Erfindung findet insbesondere Anwendung bei einem Kraftfahrzeug mit einem Verbrennungsmotor und einem in dem Abgassystem integrierten, elektrisch beheizbaren Wabenkörper.

Das technische Umfeld, nähere Einzelheiten und Ausführungsbeispiele der Erfindung, auf die diese jedoch nicht beschränkt ist, sind in den (schematischen) Figuren dargestellt und zwar zeigen:
- Fig. 1:: einen schematischen Querschnitt durch den Bereich eines elektrischen Anschlusses eines elektrisch beheizbaren Wabenkörpers,
- Fig. 2:: ein Ausführungsbeispiel eines einen Blechstapel seitlich umfassenden Zwischenstückes,
- Fig. 3:: ein weiteres Ausführungsbeispiel eines elektrischen Anschlusses mit Zwischenstück von einer Stirnseite aus gesehen,
- Fig. 4:: eine besondere Ausführungsform des Anschlussstiftes mit Zwischenstück, und
- Fig. 5:: eine schematische Veranschaulichung von strukturierten Blechlagen.

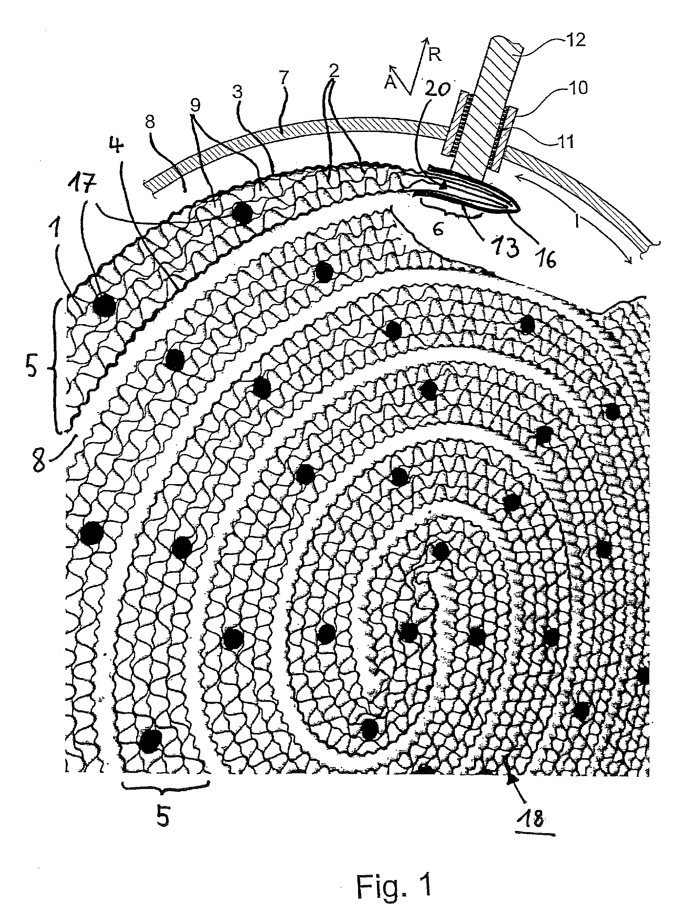

Fig. 1 zeigt in schematischer Darstellung einen Teilbereich eines elektrisch beheizbaren Wabenkörpers 18, der in einem Metallmantel 7 angeordnet ist. Der Wabenkörper 18 enthält einen Stapel 5 aus glatten oder fein strukturierten Blechlagen 1 abwechselnd angeordnet mit gewellten oder grob strukturierten Blechlagen 2, wobei der Stapel 5 eine oberste Blechlage 3 und eine unterste Blechlage 4 aufweist, die im vorliegenden Ausführungsbeispiel beide fein strukturiert sind. Die Blechlagen 1, 2, 3, 4 enden zumindest zum Teil in einem Zwischenstück 13, mit dem sie elektrisch leitend verbunden sind und welches seinerseits elektrisch leitend mit einem Anschlussstift 12 verbunden ist. Als Verbindungstechniken kommen z. B. Widerstandsschweißen und/oder Hartlöten in Betracht. Der Anschlussstift 12 ist durch eine Durchführung 10 durch den Metallmantel 7 geführt und durch eine elektrische Isolierschicht 11 von diesem isoliert. Der Isolierstift 12 verläuft in einer radialen Richtung R, wie durch einen Pfeil angedeutet ist. Die grob und fein strukturierten Blechlagen bilden zusammen Kanäle 9, die in einer ebenfalls durch einen Pfeil angedeuteten axialen Richtung A verlaufen. Der Metallmantel 7 hat einen Innenumfang I, der ebenfalls durch Pfeile angedeutet ist. Zumindest die oberste Blechlage 3 und die unterste Blechlage 4 sowie vorzugsweise auch weitere Blechlagen 1, 2 sind elektrisch leitend mit dem Zwischenstück 13 und darüber mit dem Stützstift 12 verbunden. Der Stapel 5 wird durch Stützstifte 17, die sich ggf. an einem hier nicht dargestellten benachbarten weiteren Wabenkörper abstützen können, stabilisiert. Angedeutet ist auch, wie das Zwischenstück 13 ein Ende 16 des Stapels 5 umfasst, wobei dann die Innenform des Zwischenstückes der Längsschnittsfläche 20 des Endes 16 des Stapels angepasst ist oder umgekehrt, z. B. die Form eines gekrümmten Keiles aufweist.

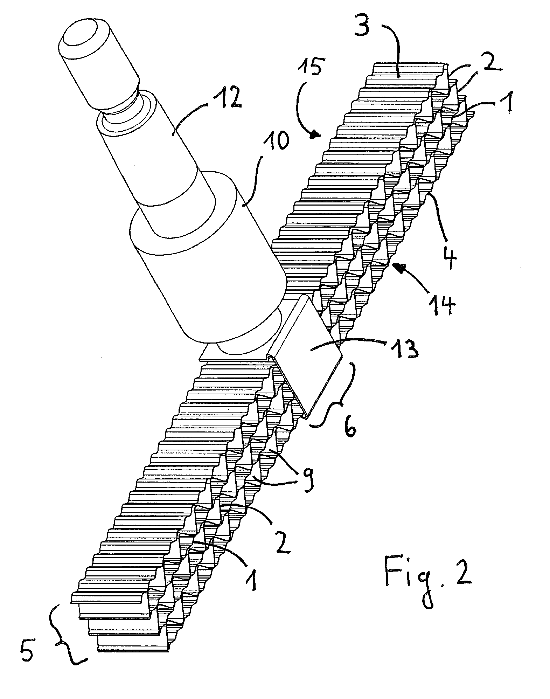

Fig. 2 veranschaulicht schematisch, wie ein Stapel 5 von Blechlagen 1, 2, 3, 4 von einem Zwischenstück 13 seitlich umfasst ist. Das Zwischenstück 13 hat dabei die Form einer Klammer, im vorliegenden Fall eine Klammer mit etwa rechteckigem Innenquerschnitt und berührt direkt die oberste Blechlage 3 und die unterste Blechlage 4 sowie stirnseitig an der Eintrittsseite 14 auch die übrigen Blechlagen 1, 2. Auf diese Weise kann ohne Verformung des Stapels 5 gleichmäßig Strom eingeleitet werden.

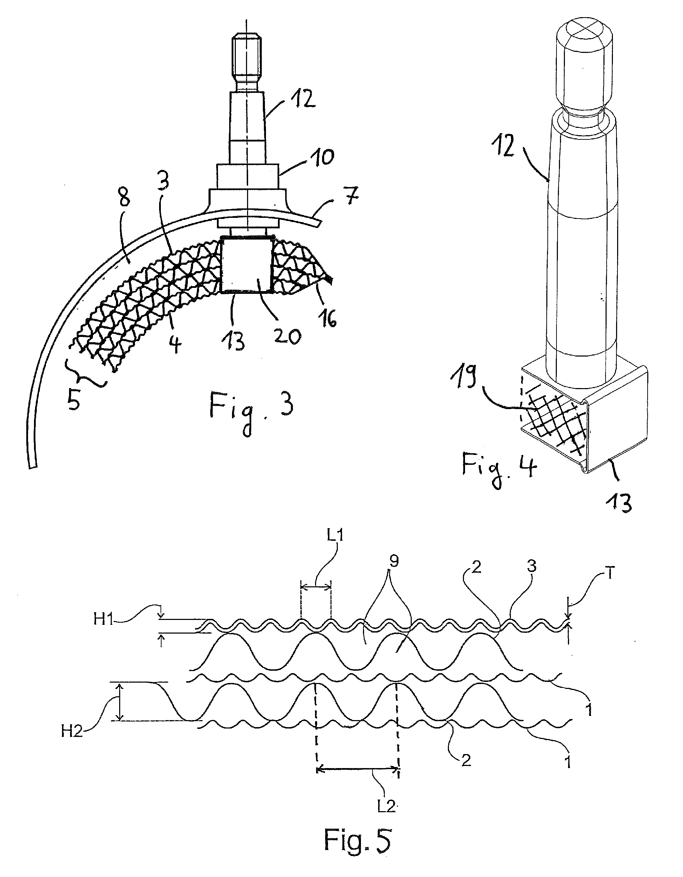

Fig. 3 zeigt schematisch, wie der Anschlussbereich 6 eines Stapels 5 aus fein strukturierten Blechlagen 1 und grob strukturierten Blechlagen 2 in einer anderen Ausführungsform gestaltet ist. Ein Anschlussstift 12, der wiederum mittels einer elektrischen Isolierschicht 11 von einer Durchführung 10 durch einen nicht dargestellten Metallmantel isoliert ist, endet mit seinem Verbindungsende 15 an einem Zwischenstück 9 und ist mit diesem und ggf. mit darunter liegenden Enden der Blechlagen 1, 2 elektrisch leitend verbunden, vorzugsweise verschweißt oder verlötet. Das Zwischenstück 9 umfasst im vorliegenden Ausführungsbeispiel das Ende des Stapels 5 in dem Anschlussbereich 6, wobei die genaue Ausgestaltung des Anschlussbereichs 6 ähnlich wie oben beschrieben in verschiedenen Ausführungsformen möglich ist. Alle Blechlagen können bevorzugt immer stärker zusammengepresst oder mit immer geringerer Wellhöhe ausgeführt sein, um die gewünschte sich verjüngende Form zu erreichen. Ein Stützstift 17 kann wiederum die gesamte Anordnung stabilisieren.

In Fig. 4 ist schematisch eine erfindungsgemäße Ausgestaltung des Stützstifts 12 mit Zwischenstück 13 in perspektivischer Darstellung gezeigt, wobei die von dem Zwischenstück umfassbare Querschnittsfläche 19 des nicht dargestellten Stapels 5 durch eine Schraffur angedeutet ist. In ähnlicher Weise kann ein Zwischenstück, wie in Fig. 1 angedeutet auch ein Ende 16 des Stapels 5 umfassen, wobei dann die Innenform des Zwischenstückes der Längsschnittsfläche 20 des Endes 16 des Stapels angepasst ist, z. B. die Form eines gekrümmten Keiles aufweist.

Fig. 5 veranschaulicht die Größenverhältnisse der Strukturen und Wellungen der Blechlagen 1, 2, 3, 4. Die fein strukturierten Blechlagen 1 in dem Stapel haben eine erste Wellung mit einer ersten Wellhöhe H1 und einer ersten Wellenlänge L1, die (hier) jeweils kleiner sind als eine zweite Wellhöhe H2 und eine zweite Wellenlänge L2 einer zweite Wellung der grob strukturierten Bleche 2. Die oberste Blechlage 3 kann darüber hinaus eine größere Dicke T haben als die übrigen Blechlagen 1, 2 des Stapels 5.

Vorsorglich sei noch darauf hingewiesen, dass die in den Figuren gezeigten Kombinationen von technischen Merkmalen nicht generell zwingend sind. So können technische Merkmale einer Figur mit anderen technischen Merkmalen einer weiteren Figur und/oder der allgemeinen Beschreibung kombiniert werden. Etwas anderes soll nur gelten, wenn hier explizit die Kombination von Merkmalen ausgewiesen wurde und/oder der Fachmann erkennt, dass sonst die Grundfunktionen der Vorrichtung nicht mehr erfüllt werden können.

Die vorliegende Erfindung ermöglicht einen einfachen und wirtschaftlich herstellbaren Aufbau eines elektrisch beheizbaren Wabenkörpers, der auch ohne Stromverteilungsstrukturen oder stützende Halbschalen im äußeren Bereich eine sehr gleichmäßige Stromverteilung und damit Aufheizung ermöglicht.

### Bezugszeichenliste

- 1: glatte / fein strukturierte Blechlagen
- 2: gewellte / grob strukturierte Blechlagen
- 3: oberste Blechlage
- 4: unterste Blechlage
- 5: Stapel
- 6: Anschlussbereich
- 7: Metallmantel
- 8: Luftspalt
- 9: Kanäle
- 10: Durchführung
- 11: elektrische Isolierschicht
- 12: Anschlussstift
- 13: elektrisch leitende Verbindung
- 14: Eintrittsseite
- 15: Austrittsseite
- 16: Ende des Stapels
- 17: Stützstift
- 18: Wabenkörper
- 19: Querschnittsfläche des Stapels
- 20: Längsschnittsfläche des Endes des Stapels

- A: axiale Richtung
- R: radiale Richtung
- I: Richtung des Innenumfangs des Mantels
- H1: erste Wellhöhe
- H2: zweite Wellhöhe
- L1: erste Wellenlänge
- L2: zweite Wellenlänge
- T: Dicke

## Patentansprüche

1. Elektrischer Anschluss von mehreren Blechlagen (1, 2, 3, 4) eines Wabenkörpers (14) an einem Anschlussstift (12), wobei der Wabenkörper (18) einen Metallmantel (7) mit einem Innenumfang (I) aufweist, durch den der Anschlussstift (12) in einer Durchführung (10) elektrisch isolierend hindurchgeführt ist, und wobei die Blechlagen (1, 2, 3, 4) abwechselnd angeordnete grob strukturierte Blechlagen (2) sowie fein strukturierte oder glatte Blechlagen (1) sind, die gemeinsam einen Stapel (5) mit einer obersten Blechlage (3) und einer untersten Blechlage (4) bilden, der für ein Gas in einer axialen Richtung (A) von einer Eintrittsseite (14) zu einer Austrittsseite (15) durchströmbare Kanäle (9) zwischen den Blechlagen (1, 2, 3, 4) aufweist, **dadurch gekennzeichnet, dass** der Anschlussstift (12) senkrecht zu den Blechlagen (1, 2, 3, 4) und damit in einer radialen Richtung (R) verläuft und mit mindestens zwei der Blechlagen (1, 2, 3, 4) über mindestens ein elektrisch leitfähiges Zwischenstück (13), welches mehrere Blechlagen (1, 3, 4) des Stapels (5) in einem Anschlussbereich (6) umgreift, metallisch verbunden ist.

2. Elektrischer Anschluss nach Anspruch 1, **dadurch gekennzeichnet, dass** die oberste Blechlage (3) in dem Stapel (5) über mindestens 35 % des Innenumfangs (I) parallel zu dem Metallmantel (7) verläuft und nur durch einen Luftspalt (8) von diesem getrennt ist.

3. Elektrischer Anschluss nach Anspruch 1 oder 2, **dadurch gekennzeichnet, dass** die oberste Blechlage (3) in dem Stapel (5) über mindestens 40 % der Länge des Innenumfangs (I) parallel zu dem Metallmantel (7) verläuft.

4. Elektrischer Anschluss nach Anspruch 1 ,2 oder 3, **dadurch gekennzeichnet, dass** die oberste Blechlage (3) des Stapels (5) fein strukturiert oder glatt ist.

5. Elektrischer Anschluss nach einem der vorhergehenden Ansprüche, **dadurch gekennzeichnet, dass** wenigstens die oberste Blechlage (3) oder die unterste Blechlage (4) zumindest in Teilbereichen eine Dickenverstärkung aufweist oder dicker ist weitere Blechlagen (1,2) des Stapels (5).

6. Elektrischer Anschluss nach einem der vorhergehenden Ansprüche, **dadurch gekennzeichnet, dass** die grob strukturierten Blechlagen (2) und die fein strukturierten Blechlagen (1, 3, 4) jeweils gewellt sind, wobei eine zweite Wellhöhe (H2) der grob strukturierten Blechlagen (2) größer ist als eine erste Wellhöhe (H1) der fein strukturierten Blechlagen (1, 3, 4).

7. Elektrischer Anschluss nach einem der vorhergehenden Ansprüche, **dadurch gekennzeichnet, dass** die grob strukturierten Blechlagen (2) und die fein strukturierten Blechlagen (1, 3, 4) gewellt sind, wobei eine zweite Wellenlänge (L2) der grob strukturierten Blechlagen (2) größer ist als eine erste Wellenlänge (L1) der fein strukturierten Blechlagen (1, 3, 4).

8. Elektrischer Anschluss nach einem der vorhergehenden Ansprüche, **dadurch gekennzeichnet, dass** der Stapel (5) durch eine Vielzahl von Stützstiften (17) in seiner Form stabilisiert ist, wobei mindestens ein Stützstift (17) in einem Abstand von weniger als 10 cm entlang des Verlaufs des Stapels (5) gemessen von dem Anschlussstift (12) entfernt angeordnet ist.

9. Elektrischer Anschluss nach einem der vorhergehenden Ansprüche, **dadurch gekennzeichnet, dass** sich das Zwischenstück (13) zumindest hin bis zu der Eintrittsseite (14) oder zu der Austrittsseite (15) des Stapels (5) erstreckt und zumindest die Eintrittsseite (14) oder zu der Austrittsseite wenigstens teilweise umgreift.

10. Elektrischer Anschluss nach einem der vorhergehenden Ansprüche, **dadurch gekennzeichnet, dass** das Zwischenstück (13) den Stapel (5) um ein Ende (16) des Stapels (5) herum umgreift.

11. Elektrischer Anschluss nach einem der vorhergehenden Ansprüche, **dadurch gekennzeichnet, dass** das Zwischenstück (13) in seiner Form zumindest an die Form der Querschnittsfläche (19) oder die Form der Längsschnittsfläche (20) des Endes (16) des Stapels (5) angepasst ist.

12. Elektrischer Anschluss nach einem der vorhergehenden Ansprüche, **dadurch gekennzeichnet, dass** das Zwischenstück (13) direkten Kontakt zu mehreren oder allen Blechlagen des Stapels (5) hat, indem diese zumindest an der Eintrittsseite (14) oder der Austrittsseite (15) auf Stoß an dem Zwischenstück (13) anliegen.

13. Elektrischer Anschluss nach einem der vorhergehenden Ansprüche, **dadurch gekennzeichnet, dass** die Querschnittsfläche (19) des Stapels (5) im Bereich des Zwischenstückes (13) die gleiche Form und Größe wie im übrigen Verlauf des Stapels (5) aufweist.

14. Elektrischer Anschluss nach einem der vorhergehenden Ansprüche, **dadurch gekennzeichnet, dass** das Ende (16) des Stapels (5) sich außerhalb des Zwischenstückes (13) verjüngt.

15. Wabenkörper (14) mit einem elektrischen Anschluss nach einem der vorhergehenden Ansprüche.

## Claims

1. Electrical connection of a plurality of sheet metal layers (1, 2, 3, 4) of a honeycomb body (14) to a connection pin (12), wherein the honeycomb body (18) has a metal casing (7) with an inner circumference (I) through which the connection pin (12) is routed in an electrically insulating manner in a bushing (10), and wherein the sheet metal layers (1, 2, 3, 4) are alternately arranged coarsely structured sheet metal layers (2) and finely structured or smooth sheet metal layers (1), which sheet metal layers together form a stack (5) with an uppermost sheet metal layer (3) and a lowermost sheet metal layer (4), which stack has channels (9), through which a gas can flow from an inlet side (14) to an outlet side (15) in an axial direction (A), between the sheet metal layers (1, 2, 3, 4), **characterized in that** the connection pin (12) runs perpendicular to the sheet metal layers (1, 2, 3, 4), and therefore in a radial direction (R), and is connected using metal to at least two of the sheet metal layers (1, 2, 3, 4) by means of at least one electrically conductive intermediate piece (13) which surrounds a plurality of sheet metal layers (1, 3, 4) of the stack (5) in a connection region (6).

2. Electrical connection according to Claim 1, **characterized in that** the uppermost sheet metal layer (3) in the stack (5) runs parallel to the metal casing (7) over at least 35% of the inner circumference (I) and is separated from said metal casing only by an air gap (8).

3. Electrical connection according to Claim 1 or 2, **characterized in that** the uppermost sheet metal layer (3) in the stack (5) runs parallel to the metal casing (7) over at least 40% of the length of the inner circumference (I).

4. Electrical connection according to Claim 1, 2 or 3, **characterized in that** the uppermost sheet metal layer (3) of the stack (5) is finely structured or smooth.

5. Electrical connection according to one of the preceding claims, **characterized in that** at least the uppermost sheet metal layer (3) or the lowermost sheet metal layer (4) has a thickened portion or is thicker than further sheet metal layers (1, 2) of the stack (5) at least in subregions.

6. Electrical connection according to one of the preceding claims, **characterized in that** the coarsely structured sheet metal layers (2) and the finely structured sheet metal layers (1, 3, 4) are each rippled, wherein a second ripple height (H2) of the coarsely structured sheet metal layers (2) is greater than a first ripple height (H1) of the finely structured sheet metal layers (1, 3, 4).

7. Electrical connection according to one of the preceding claims, **characterized in that** the coarsely structured sheet metal layers (2) and the finely structured sheet metal layers (1, 3, 4) are rippled, wherein a second ripple length (L2) of the coarsely structured sheet metal layers (2) is greater than a first ripple length (L1) of the finely structured sheet metal layers (1, 3, 4).

8. Electrical connection according to one of the preceding claims, **characterized in that** the shape of the stack (5) is stabilized by virtue of a large number of supporting pins (17), wherein at least one supporting pin (17) is arranged at a distance of less than 10 cm from the connection pin (12) as measured along the profile of the stack (5).

9. Electrical connection according to one of the preceding claims, **characterized in that** the intermediate piece (13) extends at least up to the inlet side (14) or to the outlet side (15) of the stack (5) and at least partially surrounds at least the inlet side (14) or the outlet side.

10. Electrical connection according to one of the preceding claims, **characterized in that** the intermediate piece (13) surrounds the stack (5) around one end (16) of the stack (5).

11. Electrical connection according to one of the preceding claims, **characterized in that** the shape of the intermediate piece (13) is matched at least to the shape of the cross-sectional area (19) or to the shape of the longitudinal sectional area (20) of the end (16) of the stack (5).

12. Electrical connection according to one of the preceding claims, **characterized in that** the intermediate piece (13) is in direct contact with a plurality of or all of the sheet metal layers of the stack (5) by virtue of said sheet metal layers butting against the intermediate piece (13) at least on the inlet side (14) or the outlet side (15).

13. Electrical connection according to one of the preceding claims, **characterized in that** the cross-sectional area (19) of the stack (5) in the region of the intermediate piece (13) has the same shape and size as in the remaining profile of the stack (5).

14. Electrical connection according to one of the preceding claims, **characterized in that** the end (16) of the stack (5) tapers outside the intermediate piece (13).

15. Honeycomb body (14) with an electrical connection according to one of the preceding claims.

## Revendications

1. Raccordement électrique de plusieurs couches de tôle (1, 2, 3, 4) d'un corps en nid d'abeille (14) à une broche de raccordement(12), dans lequel le corps en nid d'abeille (18) présente une enveloppe métallique (7) avec une circonférence intérieure (I) à travers laquelle on fait passer de manière isolante électriquement la broche de raccordement (12) dans une traversée (10), et dans lequel les couches de tôle (1, 2, 3, 4) sont des couches de tôle structurées grossièrement (2) ainsi que des couches de tôle structurées finement ou lisses (1) disposées en alternance, lesquelles forment ensemble une pile (5) avec une couche de tôle supérieure (3) et une couche de tôle inférieure (4), laquelle pile présente, pour un gaz, des canaux (9) pouvant être parcourus par du courant dans une direction axiale (A) depuis un côté d'entrée (14) vers un côté de sortie (15) entre les couches de tôle (1, 2, 3, 4), **caractérisé en ce que** la broche de raccordement (12) s'étend perpendiculairement aux couches de tôle (1, 2, 3, 4) et ainsi dans une direction radiale (R) et est reliée métalliquement avec au moins deux des couches de tôle (1, 2, 3, 4) via au moins une pièce intermédiaire (13) électroconductrice, laquelle entoure plusieurs couches de tôle (1, 3, 4) de la pile (5) dans une zone de raccordement (6).

2. Raccordement électrique selon la revendication 1, **caractérisé en ce que** la couche de tôle supérieure (3) dans la pile (5) s'étend sur au moins 35 % de la circonférence intérieure (I) parallèlement à l'enveloppe métallique (7) et est séparée de celle-ci seulement par un entrefer (8).

3. Raccordement électrique selon la revendication 1 ou 2, **caractérisé en ce que** la couche de tôle supérieure (3) dans la pile (5) s'étend sur au moins 40 % de la longueur de la circonférence intérieure (I) parallèlement à l'enveloppe métallique (7).

4. Raccordement électrique selon la revendication 1, 2 ou 3, **caractérisé en ce que** la couche de tôle supérieure (3) de la pile (5) est finement structurée ou lisse.

5. Raccordement électrique selon l'une des revendications précédentes, **caractérisé en ce qu'**au moins la couche de tôle supérieure (3) ou la couche de tôle inférieure (4) présente, au moins dans des zones partielles, un renfort d'épaisseur ou est plus épaisse que d'autres couches de tôle (1, 2) de la pile (5).

6. Raccordement électrique selon l'une des revendications précédentes, **caractérisé en ce que** les couches de tôle structurées grossièrement (2) et les couches de tôle structurées finement (1, 3, 4) sont respectivement ondulées, dans lequel une deuxième hauteur d'ondulation (H2) des couches de tôle structurées grossièrement (2) est supérieure à une première hauteur d'ondulation (H1) des couches de tôle structurées finement (1, 3, 4).

7. Raccordement électrique selon l'une des revendications précédentes, **caractérisé en ce que** les couches de tôle structurées grossièrement (2) et les couches de tôle structurées finement (1, 3, 4) sont ondulées, dans lequel une deuxième longueur d'ondulation (L2) des couches de tôle structurées grossièrement (2) est supérieure à une première longueur d'ondulation (L1) des couches de tôle structurées finement (1, 3, 4).

8. Raccordement électrique selon l'une des revendications précédentes, **caractérisé en ce que** la pile (5) est stabilisée dans sa forme par une pluralité de broches de support (17), dans lequel au moins une broche de support (17) est disposée à une distance de moins de 10 cm le long du tracé de la pile (5) mesurée en éloignement de la broche de raccordement (12).

9. Raccordement électrique selon l'une des revendications précédentes, **caractérisé en ce que** la pièce intermédiaire (13) s'étend au moins jusqu'au côté d'entrée (14) ou au côté de sortie (15) de la pile (5) et entoure au moins le côté d'entrée (14) ou le côté de sortie de façon au moins partielle.

10. Raccordement électrique selon l'une des revendications précédentes, **caractérisé en ce que** la pièce intermédiaire (13) entoure la pile (5) autour d'une extrémité (16) de la pile (5).

11. Raccordement électrique selon l'une des revendications précédentes, **caractérisé en ce que** la pièce intermédiaire (13) est adaptée, concernant sa forme, au moins à la forme de l'aire de section transversale (19) ou la forme de l'aire de coupe longitudinale (20) de l'extrémité (16) de la pile (5).

12. Raccordement électrique selon l'une des revendications précédentes, **caractérisé en ce que** la pièce intermédiaire (13) a un contact direct avec plusieurs couches de tôle, ou toutes les couches de tôle de la pile (5) **en ce que** celles-ci reposent en aboutement contre la pièce intermédiaire (13) au moins sur le côté d'entrée (14) ou le côté de sortie (15).

13. Raccordement électrique selon l'une des revendications précédentes, **caractérisé en ce que**, dans la zone de la pièce intermédiaire (13), l'aire de section transversale (19) de la pile (5) présente la même forme et taille que dans le reste du tracé de la pile (5).

14. Raccordement électrique selon l'une des revendications précédentes, **caractérisé en ce que** l'extrémité (16) de la pile (5) s'amenuise en-dehors de la pièce intermédiaire (13).

15. Corps en nid d'abeille (14) avec un raccordement électrique selon l'une des revendications précédentes.
